# EUROPEAN PATENT SPECIFICATION

(11) **EP 0 475 775 B1**
(45) Date of publication and mention of the grant of the patent: **26.07.1995**
(21) Application number: 91308372.1
(22) Date of filing: 13.09.1991
(51) Int. Cl.: C04B 41/00, C04B 41/85

(54) **Method of heat-treating a silicon nitride sintered body**
Verfahren zur Wärmebehandlung eines Sinterkörpers aus Siliziumnitrid
Méthode pour le traitement thermique d'un corps fritté à base de nitrure de silicium

(30) Priority: 14.09.1990 JP 244484/90
(43) Date of publication of application: 18.03.1992
(73) Proprietor: HONDA GIKEN KOGYO KABUSHIKI KAISHA, Minato-ku, Tokyo (JP)
(72) Inventor: Hamazaki, Kagehisa, Asaka-Shi, Saitama-ken (JP); Miyake, Kazumi, Higashikurume-shi, Tokyo (JP); Kawakami, Yasunobu, Fujimi-shi, Saitama-ken (JP)
(74) Representative: Cockbain, Julian, Dr.

(56) References cited:
- EP-A- 0 234 905
- DE-A- 3 443 817
- US-A- 4 466 820
- WORLD PATENT INDEX LATEST, Derwent Publications Ltd., LONDON, GB. Week 8240
- JOURNAL OF THE AMERICAN CERAMIC SOCIETY. vol. 73, no. 5, May 1990,COLUMBUS US pages 1443 - 1445; H.-E.- KIM ET AL: 'Strength of hot isostatically pressed Si3N4 after heat treatment in Ar-O2 and H2-H2O'
- JOURNAL OF MATERIALS SCIENCE. vol. 26, no. 4, 15 February 1991, LONDON GB pages 970 - 976; B. A. BENDER ET AL: 'Effect of thermochemical treatments on the strength and microstructure of SiC fibres'

## Description

The present invention relates to a method of heat-treating a silicon nitride sintered body to improve its crystallinity, thereby improving its high-temperature strength, and more particularly to a method of heat-treating a silicon nitride sintered body to improve its crystallinity, by which the desired high-temperature strength can be achieved in a short period of time.

Due to their high strength, heat resistance, thermal shock resistance, wear resistance, oxidation resistance, etc. silicon nitride sintered bodies may be used as structural ceramics for gas turbine parts, etc. which operate under severe conditions at high temperatures.

However, since silicon nitride itself is a material which cannot easily be sintered, the addition of various sintering aids is required.

These sintering aids function by forming a glass boundary phase on silicon nitride grains, thereby accelerating the sintering of the silicon nitride. In the course of sintering, it is believed that a small amount of SiO₂ present in the surface of the silicon nitride particles contributes to the formation of the glass phase on the silicon nitride grains. By using such sintering aids, a sintering reaction can proceed easily. However, the low melting point glass phase present between the silicon nitride grains reduces the high-temperature strength of the resulting sintered body.

Accordingly, attempts have been made to prevent a decrease in the strength at high temperatures of silicon nitride sintered bodies. For example, methods of selecting particular types and amounts of sintering aids, thereby achieving accelerated crystallization of the boundary phases in silicon nitride grains; a method of adding oxides of rare earth elements such as yttrium oxide; a method of adding both yttrium oxide and other oxides such as aluminium oxide (see Japanese Patent Publication No. 49-21091); and a method of adjusting the formulation of yttrium oxide, aluminium oxide and silicon nitride to improve oxidation resistance at 1400°C (see Japanese Patent Laid-Open No. 63-185863) have all been used.

However, the resulting silicon nitride sintered bodies obtained by these methods show insufficient high-temperature strength, thereby failing fully to meet the strength requirements for gas turbine parts, etc.

A further method for improving the high-temperature strength of silicon nitride sintered bodies involves embedding the silicon nitride sintered bodies in aluminium nitride powder and heating, thereby converting oxides (SiO₂) present in the glass boundary phase to SiO which then vaporizes, resulting in a decrease in the oxygen content (e.g. expressed as the SiO₂ content) of the glass boundary phase.

However, this method of lowering the SiO₂ content of the glass phase requires the heat treatment to be conducted for a long period of time, e.g., about 100 hours, to significantly increase the strength of the sintered body.

Accordingly, an object of the present invention is to provide a method of heat-treating a silicon nitride sintered body to provide it with increased crystallinity and thus high strength at a high temperature, in a shorter period of time.

We have now found that by heating silicon nitride sintered bodies embedded in a certain metal carbide or metal powders the high-temperature strength can be achieved more rapidly.

Thus viewed from one aspect the present invention provides a method of heat-treating a silicon nitride sintered body comprising embedding said body in a pulverulent material, characterised in that said material comprises a metal or metal carbide selected from W, Mo, Ta and Re and the carbides thereof and in that heating is effected in a non-oxidising atmosphere.

The sintered silicon nitride bodies treated according to the method of the invention will generally be sintered bodies produced using silicon nitride as a main component together with at least one sintering aid, e.g. as described above. The pulverulent material in which the body is embedded, e.g. deposited in and/or covered by comprises a metal selected from W, Mo, Ta and Re or a carbide of such a metal or a mixture of two or more such metals and/or carbides.

Suitable sintering aids include compounds of elements in Group IIIa of the Periodic Table (hereinafter referred to simply as "IIIa elements") or a mixture of Aℓ compounds and compounds of the IIIa elements. The IIIa elements suitable for use in the present invention include scandium, yttrium and lanthanide elements. Aℓ and the IIIa element compounds may conveniently be in the form of oxides, organic acid salts, etc. Compounds of Aℓ preferably used include Aℓ₂O₃, Aℓ₂TiO₅, etc. The compounds of the IIIa elements are preferably Y₂O₃, yttrium oxalate, Nd₂O₃, Yb₂O₃, etc. Solid solutions such as 3Y₂O₃.5Aℓ₂O₃ may also be used.

When both Aℓ₂O₃ and Y₂O₃ are used as a sintering aid, the silicon nitride sintered body preferably comprises 0.5 to 2.0 weight % of Aℓ₂O₃, 2.5 to 5.0 weight % of Y₂O₃ and a balance comprising substantially silicon nitride. When the content of Aℓ₂O₃ is higher than 2.0 weight %, the resulting sintered body has a poor oxidation resistance and a low strength at a high temperature. On the other hand, when the content of Aℓ₂O₃ is less than 0.5 weight %, the resulting sintered body cannot be made fully dense, thereby failing to achieve high oxidation resistance and strength. When the content of Y₂O₃ is higher than 5.0 weight %, the resulting sintered body has a poor oxidation resistance at a high temperature. On the other hand, when the content of Y₂O₃ is less than 2.5 weight %, the resulting sintered body is not fully dense as in the case of Aℓ₂O₃, again failing to achieve the desired oxidation resistance and strength.

The silicon nitride powder which is a main starting material for the silicon nitride sintered body preferably has a specific surface area of 8-12 m²/g. The content of metal impurities in the silicon nitride powder is desirably 200 ppm or less. Since the sintered body is subjected to a heat treatment to remove SiO₂, the silicon nitride powder is not strictly required to have a small oxygen content. However, if the oxygen content is too high, the time required for the heat treatment to remove SiO₂ increases. Therefore, the oxygen content is preferably 3.0 weight % or less.

It is preferable that the silicon nitride powder has an average particle size of about 0.3 to 0.4 »m, that Aℓ₂O₃ powder has an average particle size of about 0.4 to 0.5 »m, and that Y₂O₃ powder has an average particle size of about 0.4 to 2.0 »m.

A silicon nitride sintered body can be produced for example by firstly mixing silicon nitride powder and sintering aids such as Aℓ₂O₃ powder and Y₂O₃ powder. Mixing may be effected by a conventional method, e.g. using a ball mill, a dispersing machine, etc. Where mixing is by using a ball mill, it is preferable to add ethanol or another such fluid to the powder mixture. The balls used in the ball mill are preferably made of silicon nitride so that contamination of the powder mixture with impurities can be avoided

The resulting powder mixture is then compressed to form a green body or a pressed body having the desired shape for example using a die press, a cold isostatic press (CIP), etc. For this pressing process, pressing aids, such as a polyvinyl alcohol solution may be added, if necessary.

The sintering of the green body is conducted in a non-oxidising atmosphere, for instance, in a nitrogen gas atmosphere. The sintering may be conducted either at atmospheric pressure or at elevated pressures, e.g. a pressure of about 10 atm (1.0 x 10⁶ Pa).

It is preferred that the sintering temperature is about 1750-1950°C, and that the sintering time is about 2 to 4 hours.

When a green body is sintered at atmospheric pressure, the resulting sintered body may be subjected to a hot isostatic pressing (HIP). It is preferred that the HIP is conducted at about 1700 to 2000°C and at a pressure of about 200 to 2000 atm for about 1 to 4 hours. By the HIP treatment, the sintered body can be made fully dense, resulting in a higher strength at elevated temperature.

The silicon nitride sintered body is then subjected to a heat treatment to achieve crystallization of the boundary glass phase between the silicon nitride grains. This heat treatment may be referred to as "crystallization heat treatment".

In this treatment the sintered body is embedded in the pulverulent metal or metal carbide, i.e. a powder of at least one substance selected from W, Mo, Ta, Re and the carbides thereof, and heat-treated in a non-oxidising atmosphere.

Amongst the above powders, tungsten powder and tungsten carbide powder are particularly preferable. A mixture of tungsten powder and tungsten carbide powder may also be used. The above metal powders and metal carbide powders preferably have an average particle size of about 1 to 10 »m.

The heat treatment temperature of the silicon nitride sintered body in the metal and/or metal carbide powder is conveniently at 1400 to 1950°C, preferably 1700 to 1800°C although the temperature used to some extent depends upon the type of the powder used. When the heat treatment temperature is less than 1400°C, adequate crystallization of the grain boundary phase may not occur, and the improved high-temperature strength may not be achieved. On the other hand, if the heat treatment temperature exceeds 1950°C, the silicon nitride may undesirably start to break down. The duration of the heat treatment is conveniently 2 to 10 hours, and preferably 2 to 5 hours although it depends upon the heat treatment temperature.

The heat treatment may conveniently be carried out in a non-oxidizing atmosphere, preferably in nitrogen gas, either at atmospheric pressure or at an elevated pressure, e.g. of up to about 10 atm (1.0 x 10⁶ Pa). By using nitrogen gas, the oxidation of silicon nitride can be prevented, and thermal decomposition of silicon nitride at high temperatures can also be prevented.

In the present invention, the silicon nitride sintered body is heat-treated whilst embedded and as a result crystallization of the glass boundary phase between silicon nitride grains is achieved, so raising the melting point of the sintered body and yielding a high strength sintered body.

It is not absolutely clear why the effects of the present invention are obtained, but it is believed to be the case that heating results in oxidation of the embedding material and reduction of the glass boundary phase oxides with subsequent vaporization of certain of the redox products so driving the redox reaction further. Thus where a silicon nitride sintered body is heated whilst embedded in tungsten powder, tungsten carbide powder, etc., the oxygen of the SiO₂ present in the glass boundary phase functions to oxidize the tungsten, tungsten carbide, etc. Tungsten is oxidized to tungsten oxide, and a tungsten carbide is oxidized to tungsten oxide and carbon monoxide. Simultaneously the SiO₂ is reduced to SiO.

Tungsten oxide vaporizes at a temperature of about 1200°C or higher and since SiO is gaseous at such a high temperature, it also vaporizes. Thus, the tungsten oxide, SiO, carbon monoxide, etc. are altogether removed as gas components so that the oxidation of the remaining tungsten, tungsten carbide, etc. further proceeds by the existence of SiO₂.

The SiO₂ in the boundary phase in silicon nitride grains is thus consumed by tungsten, tungsten carbide, etc., resulting in a decrease in the content of SiO₂ in the boundary phase. Such a decrease in the content of SiO₂ in the boundary phase accelerates the crystallization of the glass boundary phase, leading to a high melting point of the boundary phase.

For the above reasons, by the heat treatment of the present invention, the strength of the grain boundary phase in the silicon nitride sintered body at a high temperature is improved, resulting in the improvement of the high-temperature strength of the silicon nitride sintered body itself.

Thus viewed from a further aspect the invention provides a heat-treated silicon nitride body produced by a method as hereinbefore described.

Preferred embodiments of the invention will now be described by way of example and with reference to the accompanying drawing in which:

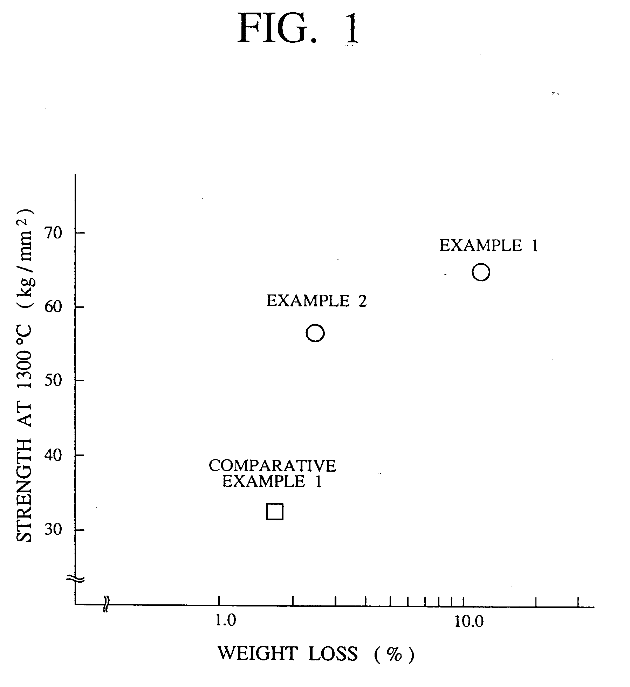

Fig. 1 is a graph showing the relationship between weight loss after heat treatment and strength at a high temperature (1300°C) for the samples of silicon nitride sintered bodies of Examples 1 and 2 and Comparative Example 1.

### Examples 1 to 5 and Comparative Examples 1 to 5

96.5 weight % of silicon nitride powder (TS-10Y, manufactured by Tosoh Corporation, Oxygen Content = 1.0 weight %), 1.0 weight % of Aℓ₂O₃ powder (AKP 30, manufactured by Sumitomo Chemical, Co., Ltd.) and 2.5 weight % of Y₂O₃ powder (fine powder, manufactured by Nippon Yttrium Co., Ltd.) were mixed together.

500g of ethanol were added to 500g of the resulting powder mixture which was then subjected to ball milling using 400g of silicon nitride balls.

The resulting mixture was then dried using a rotary evaporator and then subjected to cold isostatic pressing (CIP) at a pressure of 3000 kg/cm² to form a green body measuring 35mm x 45mm x 6mm.

This green body was sintered under the following conditions:
(1) Temperature conditions:
   (a) Heating from ambient temperature to 1200°C at a temperature-increasing rate of 20°C/minute;
   (b) Heating from 1200°C to 1800°C at a temperature-increasing rate of 6°C/minute;
   (c) Maintaining at 1800°C for 4 hours;
   (d) Cooling from 1800°C to 1200°C at a temperature-decreasing rate of 6°C/minute; and
   (e) Spontaneously cooling from 1200°C to ambient temperature in a furnace.
(2) Atmosphere
   Nitrogen gas was used. In step (c) above, the nitrogen gas pressure was set at 9.0 kg/cm².

After sintering, the resulting samples were subjected to a HIP treatment comprising heating at a temperature-increasing rate of 600°C/hour from ambient temperature to 1800°C at a nitrogen gas pressure of 200 kg/cm², maintaining at 1800°C for two hours, and then cooling in a furnace. This HIP treatment was conducted by embedding the sintered body in boron nitride powder.

Samples of the silicon nitride sintered body were then embedded in tungsten metal powder (Examples 1 and 5), or in tungsten carbide powder (Examples 2 to 4) or in aluminium nitride power (Comparative Examples 1 to 3), and heat-treated at the heating temperatures for the heating times shown in Table 1 below. For Comparative Examples 4 and 5, samples which had been sintered as above did not receive this final heat-treatment.

The weight change of each sample was determined according to the following formula: 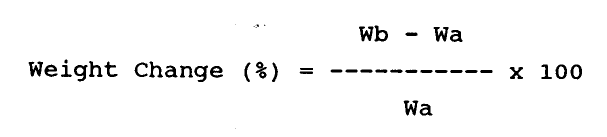
wherein Wa is the weight of the sintered body before heat treatment and Wb is the weight of the sintered body after heat treatment.

Each sample was subjected to an X-ray diffraction test to evaluate the degree of crystallinity of the boundary phase. The following value (I/I₀) was calculated for each sample. 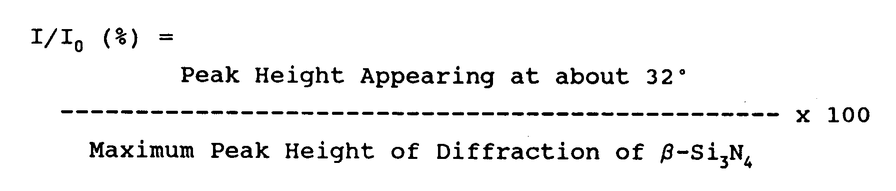
Values of the weight change and I/I₀ are shown in Table 1.

Samples of the sintered bodies measuring 3mm x 4mm x 40mm were subjected to a 3-point bending test according to JIS R 1601-1981 at 1300°C to measure their strength. The results are also shown in Table 1.

**Table 1**

| No. | Powder | Temp (°C) | Time (hr.) | Weight Change (%) | I/I₀ (%) | Strength at 1300°C (kg/mm²) |
|---|---|---|---|---|---|---|
| Example No. | | | | | | |
| 1 | Tungsten | 1750 | 5 | -11.9 | 5.2 | 64.2 |
| 2 | Tungsten Carbide | 1750 | 5 | -2.5 | 2.7 | 56.3 |
| 3 | Tungsten Carbide | 1750 | 2 | -0.6 | 2.7 | 55.8 |
| 4 | Tungsten Carbide | 1400 | 2 | -0.1 | 2.2 | 47.5 |
| 5 | Tungsten | 1750 | 10 | -14.4 | 2.6 | 65.1 |

| Comparative Example No. | | | | | | |
|---|---|---|---|---|---|---|
| 1 | Aluminum Nitride | 1750 | 5 | -1.7 | 0.8 | 32.4 |
| 2 | Aluminum Nitride | 1750 | 2 | -0.8 | 0.0 | 31.5 |
| 3 | Aluminum Nitride | 1400 | 2 | -0.1 | 0.0 | 30.6 |
| 4 | - | No Heat Treatment | | - | 0.0 | 29.2 |
| 5 | - | No Heat Treatment | | - | 0.0 | 30.5 |

It is clear from Table 1 that the silicon nitride sintered bodies subjected to the heat treatment of the invention have higher strength than those subjected to the heat treatment in which the sintered bodies were embedded in aluminum nitride powder. Samples subjected to no heat treatment after sintering (Comparative Examples 4 and 5) have a much lower strength.

The samples of Examples 1 to 5 have I/I₀ values exceeding 2%, while the I/I₀ values of the samples in the Comparative Examples are less than 2% or even zero (i.e., no peak existed at about 32°). Accordingly, it is clear that the grain boundary phases in the samples of Examples 1 to 5 have a greater degree of crystallisation than those in the Comparative Examples. It is believed that in the grain boundary phases of the samples in Examples 1 to 5, crystals consisting mainly of Y₅N(SiO₄)₃ grow.

It can be seen from Fig. 1 that the sintered body samples of Examples 1 and 2 in which the sintered bodies were subjected to the heat treatment according to the present invention, experience a greater weight loss than that of Comparative Example 1 in which the sintered body was not subjected to the heat treatment according to the present invention. It is also clear that as the weight decreases, the strength of the resulting silicon nitride sintered body increases.

### Examples 6 to 9 and Comparative Examples 6 to 9

Sintered bodies were produced analogously to those of Example 1 using the same silicon nitride powder as in Example 1 and the sintering aids as shown in Table 2 below.

The resulting sintered bodies were subjected to the crystallization heat treatment using tungsten powder at 1750°C for 5 hours (Examples 6 to 9).

For the samples thus obtained, the strength at 1300°C was measured in the same manner as in Example 1. The results are shown in Table 2.

For Comparative Examples 6 to 9, silicon nitride sintered bodies were produced from the same powder compositions as in Examples 6 to 9 but they were not subjected to a crystallization heat treatment in tungsten powder. The strength of the samples thus obtained were measured at 1300°C. The results are also shown in Table 2.

**Table 2**

| Crystallization Heat Treatment | | | | | | |
|---|---|---|---|---|---|---|
| No. | Aℓ Compound (Weight %) | Compound of IIIa Element (Weight %) | Powder | Temp. (°C) | Time (hr.) | Strength at 1300°C (kg/mm²) |
| Example No. | | | | | | |
| 6 | Aℓ₂O₃ (1%) | Yttrium Oxalate (2.5%) | Tungsten | 1750 | 5 | 65.4 |
| 7 | Aℓ₂TiO₅ (1%) | Nd₂O₃ (2.5%) | Tungsten | 1750 | 5 | 62.3 |
| 8 | - | Yb₂O₃ (2.5%) | Tungsten | 1750 | 5 | 66.2 |
| 9 | 3Y₂O₃ · 5 Aℓ₂O₃ (3%) | | Tungsten | 1750 | 5 | 67.2 |

| Comparative Example No. | | | | | | |
|---|---|---|---|---|---|---|
| 6 | Aℓ₂O₃ (1%) | Yttrium Oxalate (2.5%) | - | - | - | 31.8 |
| 7 | Aℓ₂TiO₅ (1%) | Nd₂O₃ (2.5%) | - | - | - | 32.5 |
| 8 | - | Yb₂O₃ | - | - | - | 33.8 |
| 9 | 3Y₂O₃ · 5 Aℓ₂O₃ (3%) | | - | - | - | 32.9 |

It is clear from Table 2 that the samples in Examples 6 to 9 have much higher strengths than the corresponding samples in Comparative Examples 6 to 9.

The heat-treated silicon nitride sintered bodies produced by the method of the present invention are suitable for engineering ceramic members for turbine parts, etc. which are required to have excellent high-temperature strength.

## Claims

1. A method of heat-treating a silicon nitride sintered body comprising embedding said body in a pulverulent material, characterised in that said material comprises a metal or metal carbide selected from W, Mo, Ta and Re and the carbides thereof and in that heating is effected in a non-oxidising atmosphere.

2. A method as claimed in claim 1 wherein said material comprises tungsten or tungsten carbide powder.

3. A method as claimed in either of claims 1 and 2 wherein said silicon nitride sintered body comprises silicon nitride together with at least one sintering aid.

4. A method as claimed in claim 3 wherein said sintering aid comprises a compound of a group IIIa element optionally together with an aluminum compound.

5. A method as claimed in any one of claims 1 to 4 wherein said silicon nitride sintered body comprises 0.5 to 2.0% by weight of Aℓ₂O₃, 2.5 to 5.0% by weight of Y₂O₃ and 93.0 to 97.0% by weight of silicon nitride.

6. A method as claimed in any preceding claim wherein heat treatment is carried out at a temperature in the range of from 1400 to 1950°C.

7. A method as claimed in any preceding claim wherein heat treatment is carried out for from 2 to 10 hours.

8. A method as claimed in any preceding claim wherein heat treatment is carried out under a nitrogen atmosphere.

9. A method as claimed in any preceding claim wherein heat treatment is carried out at from atmospheric pressure up to 10 atmospheres (1.0 x 10⁶ Pa).

10. A heat-treated silicon nitride sintered body produced by a method as claimed in any preceding claim.

## Patentansprüche

1. Verfahren zur Wärmebehandlung eines Siliciumnitrid-Sinterkörpers, wobei man den Körper in ein feinpulverisiertes Material einbettet, dadurch gekennzeichnet, daß das Material ein Metall oder Metallcarbid, ausgewählt unter W, Mo, Ta und Re und den Carbiden davon, umfaßt, und daß die Erwärmung in einer nicht-oxidierenden Atmosphäre durchgeführt wird.

2. Verfahren nach Anspruch 1, worin das Material Wolfram oder Wolframcarbidpulver umfaßt.

3. Verfahren nach einem der Ansprüche 1 und 2, worin der Siliciumnitrid-Sinterkörper Siliciumnitrid zusammen mit wenigstens einem Sinterhilfsstoff umfaßt.

4. Verfahren nach Anspruch 3, worin der Sinterhilfsstoff eine Verbindung eines Elements der Gruppe IIIa, gegebenenfalls in Kombination mit einer Aluminiumverbindung, umfaßt.

5. Verfahren nach einem der Ansprüche 1 bis 4, worin der Siliciumnitrid-Sinterkörper 0,5 bis 2,0 Gew.-% Al₂O₃, 2,5 bis 5,0 Gew.-% Y₂O₃ und 93,0 bis 97,0 Gew.-% Siliciumnitrid umfaßt.

6. Verfahren nach einem der vorhergehenden Ansprüche, wobei die Wärmebehandlung bei einer Temperatur im Bereich von 1400 bis 1950°C durchgeführt wird.

7. Verfahren nach einem der vorhergehenden Ansprüche, worin die Hitzebehandlung über einen Zeitraum von 2 bis 10 Stunden durchgeführt wird.

8. Verfahren nach einem der vorhergehenden Ansprüche, worin die Hitzebehandlung unter einer Stickstoffatmosphäre durchgeführt wird.

9. Verfahren nach einem der vorhergehenden Ansprüche, worin die Hitzebehandlung bei einem Druck im Bereich von Atmosphären-Druck bis zu 10 Atmosphären (1,0 x 10⁶ Pa) durchgeführt wird.

10. Wärmebehandelter Siliciumnitrid-Sinterkörper, hergestellt mit Hilfe eines Verfahrens gemäß einem der vorhergehenden Ansprüche.

## Revendications

1. Procédé de traitement thermique d'un corps fritté à base de nitrure de silicium, comprenant l'enrobage dudit corps dans un matériau pulvérulent, caractérisé en ce que ledit matériau comprend un métal ou un carbure métallique choisi parmi W, Mo, Ta et Re et les carbures de ces métaux, et en ce que le chauffage est effectué dans une atmosphère non oxydante.

2. Procédé selon la revendication 1, dans lequel ledit métal comprend de la poudre de tungstène ou de carbure de tungstène.

3. Procédé selon la revendication 1 ou 2, dans lequel ledit corps fritté à base de nitrure de silicium comprend du nitrure de silicium avec au moins un auxiliaire de frittage.

4. Procédé selon la revendication 3, dans lequel ledit auxiliaire de frittage comprend un composé d'un élément du groupe IIIa éventuellement avec un composé de l'aluminium.

5. Procédé selon l'une quelconque des revendications 1 à 4, dans lequel ledit corps fritté à base de nitrure de silicium comprend 0,5 à 2,0 % en poids de Al₂O₃, 2,5 à 5,0 % en poids de Y₂O₃ et 93,0 à 97,0 % en poids de nitrure de silicium.

6. Procédé selon l'une quelconque des revendications précédentes, dans lequel le traitement thermique est effectué à une température dans la gamme de 1400 à 1950°C.

7. Procédé selon l'une quelconque des revendications précédentes, dans lequel le traitement thermique est effectué pendant 2 à 10 heures.

8. Procédé selon l'une quelconque des revendications précédentes, dans lequel le traitement thermique est effectué sous une atmosphère d'azote.

9. Procédé selon l'une quelconque des revendications précédentes, dans lequel le traitement thermique est effectué à une pression allant de la pression atmosphérique à 10 atmosphères (1,0 x 10⁶ Pa).

10. Corps fritté à base de nitrure de silicium traité thermiquement, produit par un procédé selon l'une quelconque des revendications précédentes.
